(19) Europäisches Patentamt / European Patent Office / Office européen des brevets

(11) **EP 4 268 359 B1**

(12) **EUROPEAN PATENT SPECIFICATION**

(45) Date of publication and mention
of the grant of the patent:
**17.06.2026  Bulletin 2026/25**

(21) Application number: **20838095.6**

(22) Date of filing: **23.12.2020**

(51) International Patent Classification (IPC):
$H02K\ 21/22^{(2006.01)}$      $H02K\ 29/03^{(2006.01)}$
$H02K\ 1/2791^{(2022.01)}$

(52) Cooperative Patent Classification (CPC):
**H02K 21/22; H02K 1/2791; H02K 29/03;**
H02K 2213/03

(86) International application number:
**PCT/EP2020/087795**

(87) International publication number:
**WO 2022/135713 (30.06.2022 Gazette 2022/26)**

(54) **METHOD OF PROVIDING A MAGNETIC POLE PATTERN OF A SYNCHRONOUS POLYPHASE ELECTRICAL MACHINE**

VERFAHREN ZUR BEREITSTELLUNG EINES MAGNETPOLMUSTERS EINER SYNCHRONEN DREHSTROMMASCHINE

PROCÉDÉ DE RÉALISATION D'UNE CONFIGURATION DE PÔLES MAGNÉTIQUES D'UNE MACHINE ÉLECTRIQUE SYNCHRONE POLYPHASÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.11.2023  Bulletin 2023/44**

(73) Proprietor: **Elaphe Pogonske Tehnologije D.o.o.**
**1000 Ljubljana (SI)**

(72) Inventor: **STROJNIK, Martin**
**1230 Domzale (SI)**

(74) Representative: **Grünecker Patent- und**
**Rechtsanwälte**
**PartG mbB**
**Leopoldstraße 4**
**80802 München (DE)**

(56) References cited:
WO-A1-2011/127960    JP-A- 2020 178 491
US-A1- 2010 045 131    US-A1- 2010 117 476
US-A1- 2011 309 705    US-A1- 2017 077 773

- **NICOLA BIANCHI ET AL: "Design Techniques for Reducing the Cogging Torque in Surface-Mounted PM Motors", IEEE TRANSACTIONS ON INDUSTRY APPLICATIONS, IEEE SERVICE CENTER, PISCATAWAY, NJ, US, vol. 38, no. 5, 1 September 2002 (2002-09-01), XP011073515, ISSN: 0093-9994**
- **MAGNUSSEN F ET AL: "Parasitic Effects in PM Machines With Concentrated Windings", IEEE TRANSACTIONS ON INDUSTRY APPLICATIONS, IEEE SERVICE CENTER, PISCATAWAY, NJ, US, vol. 43, no. 5, 1 September 2007 (2007-09-01), pages 1223 - 1232, XP011192492, ISSN: 0093-9994, DOI: 10.1109/TIA.2007.904400**

## Description

## Technical Field

The present invention relates to the field of electrical machines, and in particular to the electromagnetic design of a direct drive in-wheel or near-wheel motor that reduces the unwanted acoustic noise as well as vibration and torque ripple.

## Background of the Invention

Many solutions in the prior art focus on excitation of electromagnetic forces and reduction of cogging and torque ripple in an electric machine. This can be done in several ways. The most common technique for achieving this is skewing of either the stator or rotor to smooth out the transition of rotor poles over stator teeth, or by selection of a winding type that has a high frequency of cogging torque. In many cases these solutions are either insufficient or have specific disadvantages. Therefore, other methods of torque pulsation minimization are needed. Some solutions are based on motor control, such as US 7,064,503 B2, which discloses a method for controlling a multi-phase electrical ship motor that is supplied with electric energy via a power converter. The phase currents flowing in the windings are controlled via a power converter in order to minimize noise borne by the structure.

Another example is US 9,627,936 B2 which discloses a permanent magnet motor with two sets of armature in the coils, where one set of armature windings receives current from a first inverter and second set of armature windings receives current from a second inverter, and a base difference between three phase currents in the first inverter and second inverter is 20 to 40 electrical degrees.

Some designs focus on specific proportions of motor dimensions in order to achieve a small torque pulsation. US 9,059,621 B2 discloses an electric rotating machine with reduced oscillation and noise by lowering torque ripple. The machine is comprised of a stator with teeth and slots for accommodating coils, and a rotor with permanent magnets embedded in a "V"-shaped rotor architecture, where specific proportions of rotor and stator dimensions have to fall within a certain range, in order to minimize electromagnetic noise and torque ripple.

More common, however, are methods based on breaking the symmetry of the motor design in order to reduce torque pulsations.

EP 0559818 B1 discloses a switched reluctance motor having a stator with a plurality of evenly spaced salient poles and a rotor having a plurality of unevenly spaced salient poles, where the rotor poles are spaced alternately from adjacent rotor poles by angles a1 and a2. The invention claims to improve torque characteristics and to reduce torque ripple.

US 4,751,416 A discloses a permanent magnet motor with magnetic poles distributed non-uniformly on the rotor. Some magnetic poles are displaced through an angle corresponding to a fraction of a stator slot pitch.

US 7,592,729 B2 discloses an arrangement of magnets on a rotor in a number of pole pairs, where at least one pole pair is shifted by a predetermined distance in relation to an equidistant distribution of all of the pole pairs.

US 8,120,223 B2 and US, 8,018,109 B2 disclose an internal permanent magnet machine with multiple axial rotor sections, each section having multiple rotor laminations. Permanent magnets are placed asymmetrically in lamination openings and laminations of the second section are flipped over a radial axis with respect to the first section in order to create asymmetry and attenuate torque caused by the harmonic components of magnetic flux.

US 9,590,458 B2 discloses pole sections, where the symmetry is broken by unequal distribution of these pole sections. A rotor is disclosed for an electrical machine including a plurality of pole sections with adjacent poles within each of the pole sections being distanced by a first uniform pole pitch. Adjacent poles belonging to different pole sections are distanced by a second (smaller) pole pitch at one end of each pole section, and by a third (larger) pole pitch at the other end of each pole section. Alternatively, a corresponding adjustment of coil pitches can be performed in a stator of an electrical machine.

JP 8251847 discloses a permanent magnet machine having magnet poles divided into four blocks, where magnets from the opposing two blocks are adjusted in a balanced manner by symmetrically shifting the circumferential position of the two blocks so that two opposing blocks have cogging torque reversed with respect to the remaining two blocks, therefore reducing the resulting cogging torque of the machine.

Further relevant prior art is described in US 2010/117476 and US 2010/045131.

However, the amount of acoustic noise generated by the conventional electrical machines still leaves room for improvement.

## Summary of the Invention

The present invention provides a method of providing a distinct pattern of magnetic pole pairs in order to reduce noise and vibrations deriving from motor resonances of said machine. The method is defined in claim 1. Further preferred embodiments are defined in the dependent claims. In the following, a synchronous polyphase electrical machine is described, however, presently, the aforementioned method is claimed.

This is achieved by the features as set forth in the independent claims. Preferred embodiments are the subject matter of dependent claims.

In the prior art, electromagnetic excitation is considered only in the context of minimizing torque pulsations. In contrast thereto, the present invention takes into account both the mechanical structure of the motor and the radial distribution of electromagnetic forces. It is thus the particular approach of the present invention to provide a configuration of the rotor magnetic poles that will minimize the deflection of the motor structure and therefore produce a low amount of acoustic noise.

A synchronous polyphase electrical machine is provided, which comprises a rotor with a number of PP rotor magnetic pole pairs, each magnetic pole pair comprising two magnetic poles of opposite polarity, PP being an integer greater than; a stator with a number of NSPP stator slots per rotor magnetic pole pair and windings arranged in said stator slots, NSPP being an integer greater than zero; wherein said rotor magnetic poles are arranged into N clusters of more than 2 poles per cluster, wherein said clusters are dimensionally identical, and wherein the N clusters are distributed uniformly around the circumference of the rotor, and where N is a divisor of PP chosen so that the following holds:

$$fR(N) > RPS*NSPP*PP$$

and

$$fS(N) > RPS*NSPP*PP,$$

wherein RPS is a maximum operating speed of the electrical machine, fR(N) is an eigen-frequency of an N-th circumferential eigen-mode of the rotor, and fS(N) is an eigen-frequency of an N-th circumferential eigen-mode of the stator.

In a preferred embodiment, also at least one of the following relations hold for any divisor N* of PP with N*<N:

$$fR(N*) < RPS*NSPP*PP$$

or

$$fS(N*) < RPS*NSPP*PP$$

wherein fR(N*) is an eigen-frequency of an N*-th circumferential eigen-mode of the rotor, and fS(N*) is an eigen-frequency of an N*-th circumferential eigen-mode of the stator.

The rotor magnetic field is created by permanent magnets on the rotor. Here, all of the rotor permanent magnets are preferred to have the same shape and dimension. Said dimensions are preferably identical to within 10% of each dimension.

According to the present invention, all of the rotor permanent magnets are surface mounted, wherein the distance between each adjacent magnet within each cluster is the same and wherein the distance between the last magnet of one cluster and the adjacent magnet of the next cluster is larger than the distance between two adjacent magnets within each cluster. Moreover, the distance between each adjacent rotor permanent magnet within each cluster is preferably minimal, so that the said magnets touch.

In a preferred embodiment, the stator winding is a distributed winding with 6 slots per pole pair. The rotor may be configured as an outer rotor with the rotor permanent magnets being magnetized radially.

In a preferred embodiment, there are M equal magnetic poles of alternating polarity within each cluster, and they are arranged according to the following equation

$$\alpha 1 = (M*NSPP/2-1)*SP / M,$$

where SP is stator pitch (combined width of stator tooth and gap), and $\alpha 1$ is the distance between centers of magnetic poles, called rotor magnetic pole pitch, within the cluster.

**Brief description of the figures**

The above and other objects and features of the present invention will become more apparent from the following description and preferred embodiments given in conjunction with the accompanying drawings, in which:

Figure 1 is a schematic drawing of a conventional outer rotor machine.
Figure 2 shows different circumferential modes of deflection of a cylindrical structure.
Figure 3 is a schematic drawing of an outer rotor according to an embodiment of the present invention.
Figure 4 is a schematic drawing of an outer rotor according to a further embodiment of the present invention.
Figure 5 is a schematic drawing of a rotor iron design not according to the present invention.
Figure 6 shows a detail of Figure 5.
Figure 7a shows a reduction in torque ripple, over one ripple period.
Figure 7b shows emitted motor sound power at different rotating speeds for equally spaced and clustered pole configuration.

Identical or corresponding elements have the same reference signs throughout the description.

**Detailed description**

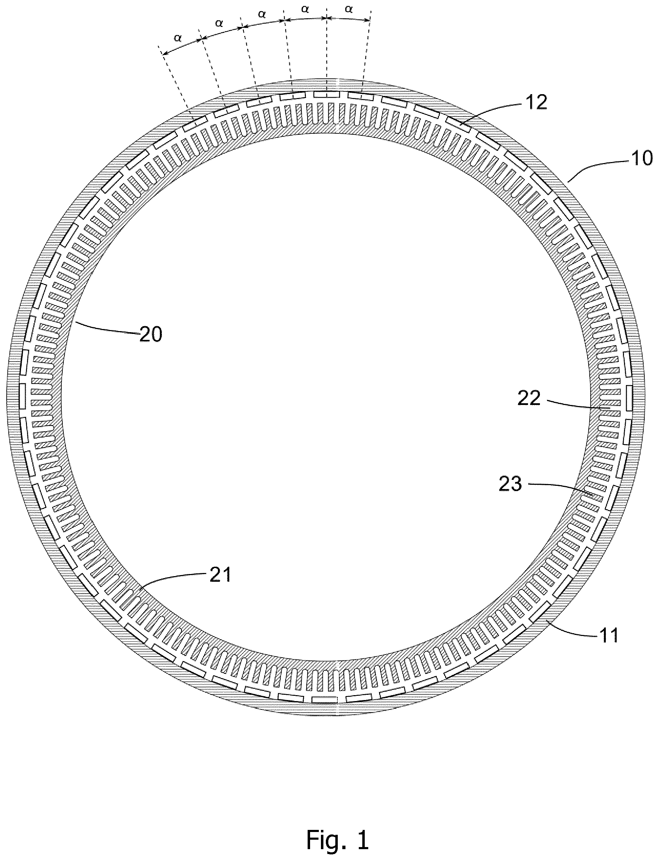

Direct drive motors for electric vehicles, in particular in-wheel motors, are typically configured as an outer rotor machine, i.e., an electric machine with a rotor that radially envelopes the stator. The term direct drive motor generally refers to electrical machines that directly deliver the output torque to wheels, propellers or other means of transforming torque to longitudinal, lateral or vertical force, without use of gears for reducing speed and increasing torque. Figure 1 is a schematic drawing of a conventional outer rotor machine. This machine has a rotor **10** and a stator **20**. The rotor **10** has a ferromagnetic rotor yoke **11** with a plurality of equally spaced permanent magnets **12** surface-mounted thereon. The angular pole pitch is denoted by $\alpha$. The stator **20** has a plurality of stator slots **22** and stator teeth **23** such that there is an integer number of slots per pole pair and a stator yoke **21** that provides a magnetic flux path between stator teeth.

An outer rotor machine with a configuration as shown in Figure 1 is structurally less rigid than its inner rotor counterpart and will thus exhibit more pronounced structural resonances at lower frequencies.

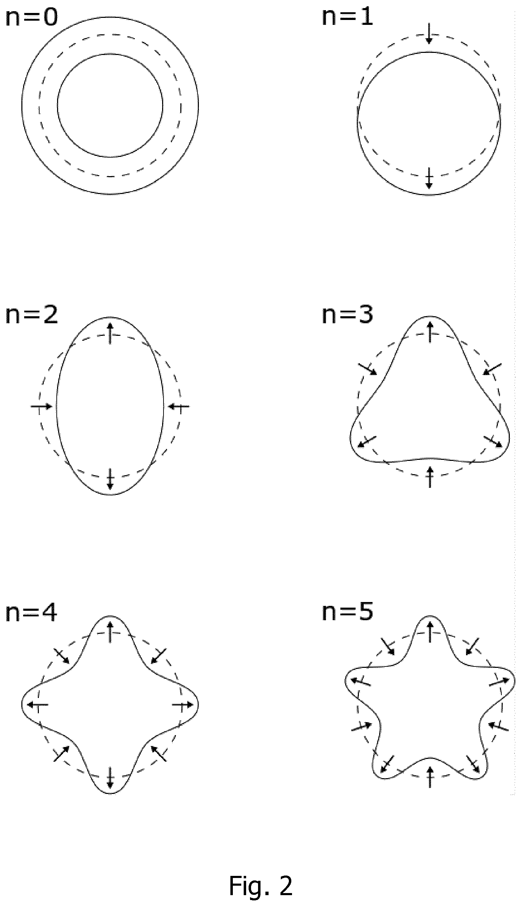

Figure 2 illustrates different circumferential modes of deflection of a cylindrical structure. The order of mode is marked with n, where n=0 represents "breathing" or "pulsating" mode, n=1 represents "beam bending" mode which may be a result of single sided unbalanced magnetic pull in the airgap, and n>1 represents wave shaped deflections of the structure.

The motor of Figure 1 will thus exhibit structural resonances of an n-th circumferential mode, where the first several modes are presented in Figure 2, at frequencies $f\_n$, where $f\_n+1 > f\_n$ for n>1. Modes n = 0 and 1 are rather different, n=0 is called breathing mode, and mode n=1 is displaced due to unbalanced magnetic pull, while modes above 1 correspond to different deflection modes. The higher the mode is the less airborne noise it produces, and the structural resonance of the corresponding symmetry lies at a higher frequency. This can be easily explained by the fact that the higher the mode is the smaller the length at which the deflection occurs and the structure is therefore stronger. Also, the noise radiation factor of higher modes becomes large at higher frequencies.

Each motor excites the n=0 symmetry mode and in the case of a machine with a quantity of rotor pole pairs (PP) above 10, which implements distributed winding, and equally spaced rotor pole arrangement, (Figure 1), this mode is typically the loudest, because the next mode allowed by the symmetry is quite high, since it equals the number of pole pairs (PP). It is therefore beneficial to lower the excitation of n=0 mode, but at the same time avoid directly exciting any other low order mode. Also, at the same time focus must be placed no only on distribution of radial forces, but also on torque ripple.

The inventors have realized that the mechanical structure of a motor and the radial distribution of the electromagnetic forces has to be taken into account for reducing acoustic noise.

The present invention thus provides a synchronous polyphase machine with a novel, efficient way of reducing noise and vibrations, by minimizing not only tangential but also radial oscillating forces between the rotor and the stator of said machine and by also taking into account the distribution of said forces, to prevent excitation of modal resonances of the rotor and stator of said machine. The invention is realized with a pattern of rotor magnetic poles distribution, which results in acoustic noise and structural vibration output reduction without causing a reduction of torque, efficiency and without causing unbalanced magnetic pull.

In the present invention a synchronous polyphase machine comprises a rotor and a stator. The stator comprises at least three electrical phases generating a rotating magnetic field with rotational speed synchronized with the rotational speed of the rotor magnetic pole rotation.

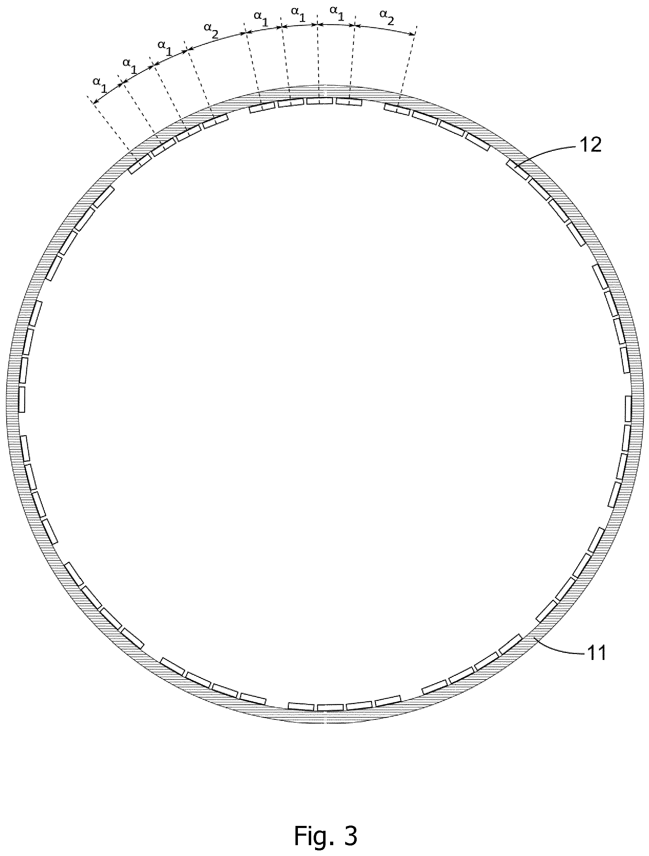

Figure 3 is a schematic drawing of an outer rotor according to an embodiment of the present invention. The rotor yoke **11** is provided with a plurality of surface mounted permanent magnets **12** that are arranged in clusters.

More specifically, the rotor **10** of the synchronous polyphase machine comprises PP magnetic pole pairs. Each pole pair comprises of two magnetic poles of opposite polarity. The number of rotor magnetic pole pairs PP is greater than 10 and the maximum rotation speed is RPS (in revolutions per second). The stator **20** of said polyphase machine comprises NSPP stator slots per pole pair. NSPP is an integer. The rotor has an infinite number of circumferential resonant Eigen-modes, where the m-th Eigen-mode has an Eigen-frequency fR(m). The stator has an infinite number of circumferential resonant Eigen-shapes, where the m-th Eigen-shape has an Eigen-frequency fS(m). Furthermore, said rotor magnetic poles are arranged into N clusters of at least two pole pairs per cluster. Said clusters are identical to each other. Alternatively, the clusters have dimensions that are identical within a 10% tolerance for each dimension. Said clusters are distributed in a uniform fashion around the circumference of the rotor (Figures 3, 4 and 5). In the present invention integer N is chosen so as to ensure simultaneous validity of both the following relations:

$$fR(N) > RPS*NSPP*PP$$

and

$$fS(N) > RPS*NSPP*PP$$

The validity of said relations ensures that the N-fold symmetry introduced by the rotor permanent magnet cluster array cannot directly excite the corresponding Eigen-shape within the operating speed area of the underlying synchronous polyphase machine. The arrangements of magnetic poles inside the clusters is such that it minimizes oscillations of not only torque ripple, but also resultant radial force within a cluster in a radial flux machine. Because the resultant electromagnetic force on each cluster is the same in a cylindrical coordinate system, no unbalanced magnetic pull is created. This principle can also be applied to an axial flux machine, where the arrangement of poles minimizes axial force oscillations within a cluster.

Especially in large direct drive machines with many pole pairs, the structural deflection of mode m=0, as shown in Figure 2, can be the main source of acoustic noise. In order to effectively minimize deflection of this mode, it is beneficial to have as many magnetic poles within cluster **15** as possible. Therefore, in addition to the above conditions, it is recommended that for any integer factor N* of possible said magnetic poles cluster arrangements, where N*<N, the following equations hold true:

$$fR(N^*) < RPS*NSPP*PP$$

or

$$fS(N^*) < RPS*NSPP*PP$$

This technique can be further combined with other techniques for decreasing cogging or torque ripple, such as skewing or current modulation.

A first typical embodiment of the invention is a synchronous polyphase machine with an outer rotor with PP rotor magnetic pole pairs realized with permanent magnets **12** being surface mounted with alternating radial field orientation, as shown in Figure 3. According to the typical embodiment the permanent magnets are mounted in N dimensionally identical clusters on the surface of the ferromagnetic rotor yoke **11,** according to the above equations, where there are M magnets **12,** forming M magnetic poles, within each cluster.

All of the permanent magnets **12** may have the same shape and dimension. The distance between the centers of two adjacent magnets within a cluster $\alpha_1$, called pole pitch, is constant. The distance between the centers of the last magnet of one cluster and the adjacent magnet of the next cluster is larger than the distance between the magnets within each cluster. Consequently, the pole pitch of the last magnet of the cluster is $\alpha_2 > \alpha_1$. The value of $\alpha_1$ is the same within each cluster. The value of $\alpha_2$ is the same between any two adjacent clusters.

This embodiment is preferably implemented in such a way that there are NSPP stator slots 22 per rotor magnetic pole pair containing a distributed winding. The size of all rotor magnetic poles pitch is not equal; however, the stator slots are arranged as if the distribution of magnetic poles on the rotor were equally spaced, as in the case of the conventional motor shown in Figure 1.

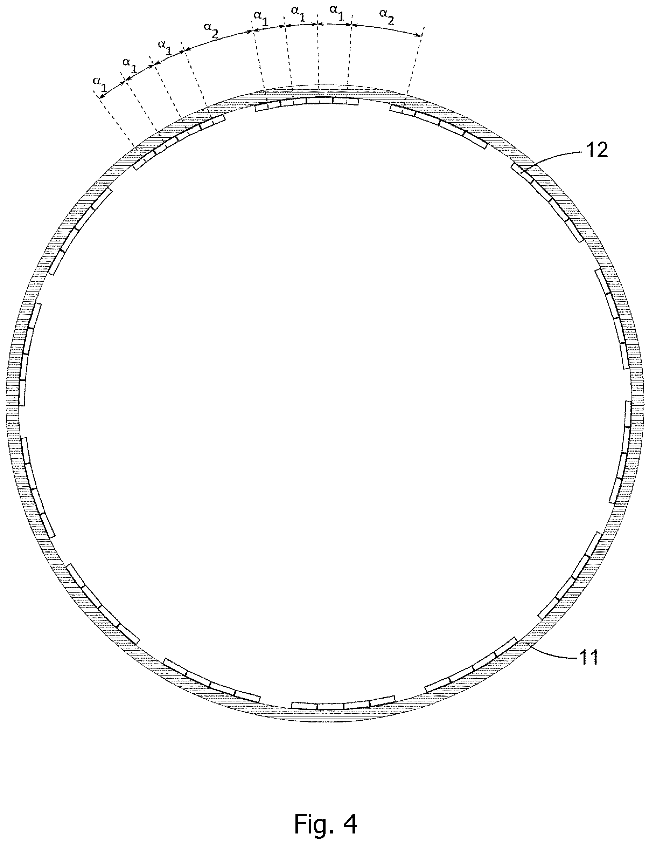

Figure 4 is a schematic drawing of an outer rotor according to a preferred embodiment of the present invention. The rotor yoke **11** is provided with a plurality of surface mounted permanent magnets **12,** wherein magnetic poles are arranged in clusters such that magnets within each cluster touch each other. Specifically, the width of the magnets equals the pole pitch $\alpha_1$, meaning that the magnets within a cluster lean on each other as shown in Figure 4.

In a particular case of magnetic pole distribution, when cogging is being minimized, M magnets within each cluster are arranged according to the following equation:

$$(MW+SW) = (M*NSPP/2-1)*SP/M,$$

where SP is stator pitch (combined width of stator tooth **23** and slot **22),** MW is magnet width, and SW is the distance between two adjacent magnets within the cluster, therefore MW + SW = $\alpha_1$. In this way, the timing of the passage of each magnet over the stator teeth is slightly shifted, which also decreases cogging amplitude.

According to a further embodiment not according to the present invention, the synchronous polyphase machine is provided with an inner rotor with PP pole pairs that are realized with permanent magnets inserted into the rotor iron.

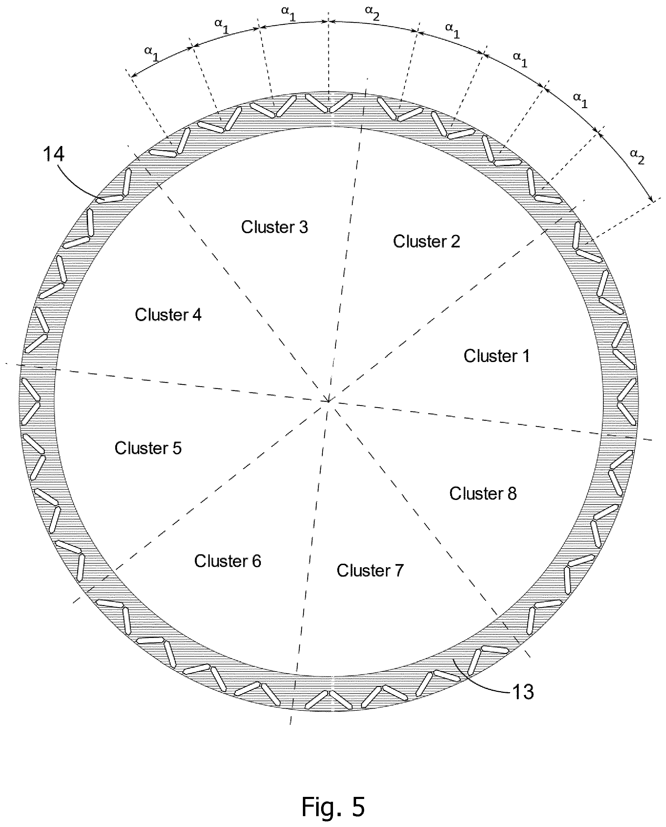

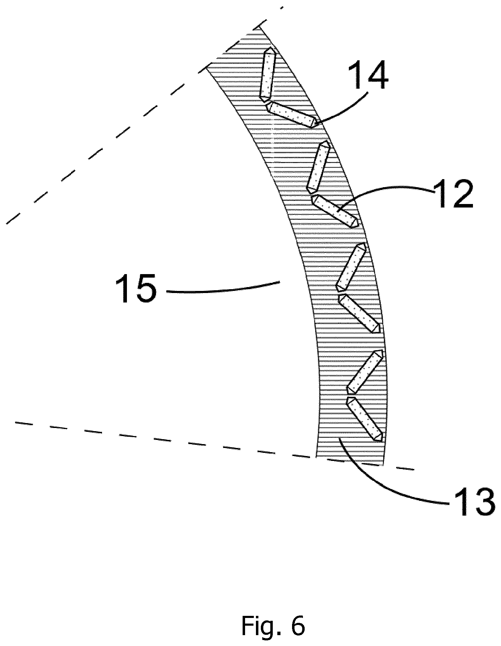

Figure 5 is a schematic drawing of such a rotor iron design according to this embodiment of the present invention. The rotor iron design corresponds to an inner rotor geometry with slots for inserted permanent magnets, where rotor poles are arranged in clusters. Figure 6 represents an inset of Figure 5 of one cluster, additionally showing permanent magnets inserted into rotor magnet slots, comprising four rotor magnetic poles of alternating polarity.

Figure 5 shows a rotor iron **13** in which a plurality of cavities **14** are formed for receiving magnets. The cavities are arranged in clusters so as to form magnetic poles with pole pitch $\alpha_1$ within the cluster, and $\alpha_2$ between adjacent clusters. The centers of poles are displaced from an equally spaced configuration in such a way that the timing of the passage of each pole over the stator teeth is shifted, and therefore the resulting pulsation of electromagnetic force over each cluster is decreased.

Figure 6 corresponds to one cluster of Figure 5, where permanent magnets **12** are inserted into magnet cavities **14.** Magnets form four rotor magnetic poles of alternating polarity within a cluster. The sizes of the permanent magnets **12** and magnet cavities **14** are the same in order to facilitate manufacturing.

In a particular case of magnetic pole distribution, when cogging is being minimized, the distribution described in the first embodiment can be generalized as follows: M poles within each cluster are arranged according to the following equation:

$$\alpha_1 = (M*NSPP/2-1)*SP/M,$$

where SP is stator pitch (combined width of stator tooth **23** and slot **22).** In this way, the timing of the passage of each magnetic pole over the stator teeth is slightly shifted, which decreases cogging amplitude.

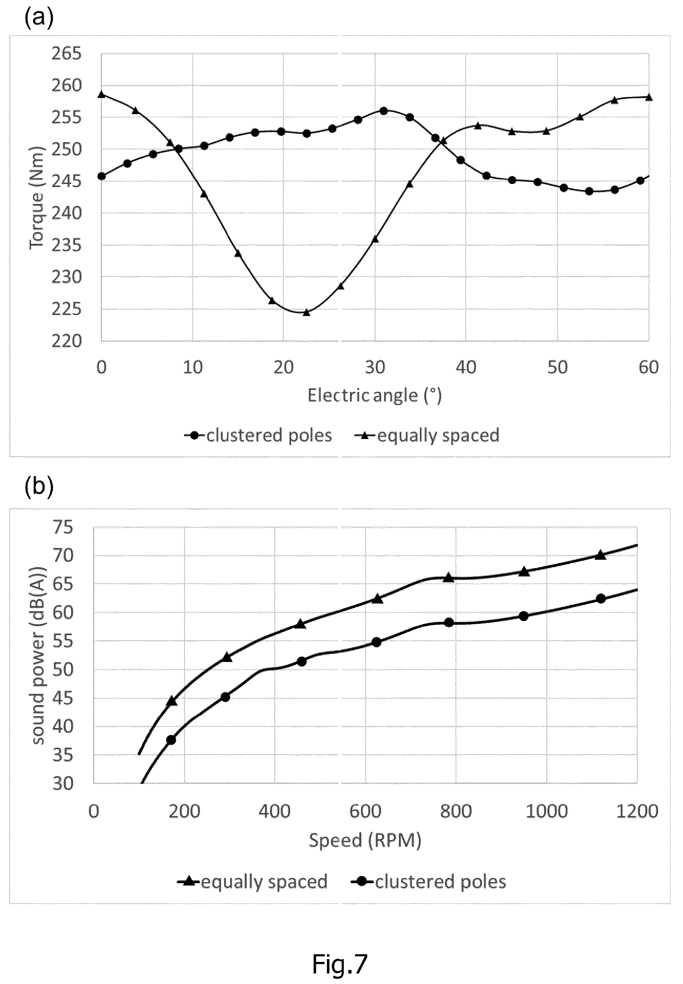

In the presented embodiments, all the poles within a cluster are equal, all magnets 12 have the same size. This can be beneficial for production and cost optimization, but is not necessary. In Figure 7a, the amplitude of torque ripples for a motor according to the embodiment shown in Figure 3 is compared to that of a conventional motor with equally spaced pole configuration. While maintaining the same torque level, ripple is decreased by 60%.

In Figure 7b, the emitted sound power for a motor according to the embodiment shown in Figure 3 is compared to that of a conventional motor with equally spaced pole configuration. There is a 5-9 dB reduction in emitted sound power over the whole operating speed range. The present invention is especially useful and effective in connection with a machine with an outer rotor, and in particular in connection with direct drive motors for electric vehicles. The speed of such a direct drive motor output is naturally limited by the maximum speed of the wheels of the electric vehicle (or its propellers or other means of transforming torque to linear propulsion), thus allowing the design of the motor to be specifically adapted to the desired application.

Although the present invention has been described with an emphasis on outer rotor machines, it is also applicable to a design where the stator of the electric motor radially envelopes the rotor. Moreover, the present invention can be applied to machines with an inner or outer rotor and on axial flux machines.

## Claims

1. A method of providing a distinct pattern of magnetic poles of pole pairs, of a

   synchronous polyphase electrical machine in order to reduce acoustic noise and
   vibrations deriving from modal resonances of said machine, wherein each magnetic pole pair comprising two magnetic poles of opposite polarity, the machine comprising:

   a rotor (10) with a number of PP rotor magnetic pole pairs; PP being an integer greater than 10; and
   a stator (20) with a number of NSPP stator slots per rotor magnetic pole pair and windings arranged in said stator slots, NSPP being an integer greater than zero;
   the method comprises the step of arranging said rotor magnetic poles into N clusters of more than 2 poles per cluster, wherein N is chosen such that the following inequations are fulfilled:

   $$fR(N) > RPS*NSPP*PP$$

   and

   $$fS(N) > RPS*NSPP*PP,$$

   wherein PP is the number of PP rotor magnetic pole pairs, NSPP is the number of stator slots, RPS is a maximum operating speed of the electrical machine,
   fR(N) is an eigen-frequency of an N-th circumferential eigen-mode of the rotor, and fS(N) is an eigen-frequency of an N-th circumferential eigen-mode of the stator, and wherein N is a divisor of PP,
   wherein the cluster is a group of permanent magnet poles, wherein all of the rotor permanent magnets (12) are mounted on a surface of the rotor (10), wherein distances between
   adjacent magnets within each cluster are identical, and wherein the distance between the last magnet of one cluster and the adjacent magnet of the next cluster is larger than the distance between two adjacent magnets within each cluster, wherein the clusters are distributed uniformly around the circumference of the rotor.

2. The method according to claim 1, wherein for any divisor N* of PP with N*<N, the following holds:

   $$fR(N^*) < RPS*NSPP*PP$$

   or

   $$fS(N^*) < RPS*NSPP*PP,$$

   wherein fR(N*) is an eigen-frequency of an N*-th circumferential eigen-mode of the rotor, and fS(N*) is an eigen-frequency of an N*-th circumferential eigen-mode of the stator.

3. The method according to claim 2, wherein in the machine all of the rotor permanent magnets (12) have the same shape and dimension.

4. The method according to claim 1, wherein in the machine the distance between each adjacent rotor permanent magnet (12) within each cluster is set minimal, so that the said magnets touch.

5. The method according to any of claims 1 to 4, wherein in the machine the stator winding is a distributed winding with 6 slots per pole pair.

6. The method according to claim 1, wherein in the machine the cluster dimensions are identical to within 10% of each dimension.

**7.** The method according to any of claims 1 to 3, wherein in the machine the rotor (10) is an outer rotor and the rotor permanent magnets (12) are magnetized radially.

**8.** The method according to claim 3, wherein there are M equal magnetic poles of alternating polarity within each cluster, and they are arranged according to the following equation

$$\alpha 1 = (M*NSPP/2-1)*SP / M,$$

where SP is the stator pitch, which is the width of a stator tooth combined with the width of a stator gap, and $\alpha 1$ is the rotor magnetic pole pitch, which is the distance between centers of magnetic poles within each cluster.

**Patentansprüche**

**1.** Verfahren zum Bereitstellen eines charakteristischen Musters von Magnetpolpaaren einer synchronen mehrphasigen elektrischen Maschine, um akustische Geräusche und Schwingungen zu reduzieren, die aus Modenresonanzen der Maschine resultieren, wobei jedes Magnetpolpaar zwei Magnetpole entgegengesetzter Polarität umfasst, und die Maschine umfasst:

    einen Rotor (10) mit einer Anzahl von PP Rotor-Magnetpolpaaren, wobei PP eine ganze Zahl größer als 10 ist; und
einen Stator (20) mit einer Anzahl von NSPP Statorschlitzen pro Rotormagnetpolpaar und in diesen Statorschlitzen angeordneten Wicklungen, wobei NSPP eine ganze Zahl größer als Null ist;
das Verfahren umfasst den Schritt des Anordnens der Rotormagnetpole in N Clustern mit mehr als 2 Polen pro Cluster, wobei N so gewählt wird, dass die folgenden Ungleichungen erfüllt sind:

$$fR(N) > RPS*NSPP*PP$$

und

$$fS(N) > RPS*NSPP*PP,$$

wobei PP die Anzahl der PP Rotormagnetpolpaare ist, NSPP die Anzahl der Statorschlitze ist, RPS eine maximale Betriebsdrehzahl der elektrischen Maschine ist, fR(N) eine Eigenfrequenz eines N-ten Umfangseigenmodus des Rotors ist und fS(N) eine Eigenfrequenz eines N-ten Umfangseigenmodus des Stators ist, und wobei N ein Teiler von PP ist,
wobei der Cluster eine Gruppe von Permanentmagnetpolen ist, wobei alle Rotor-Permanentmagnete (12) auf einer Oberfläche des Rotors (10) angebracht sind, wobei die Abstände zwischen benachbarten Magneten innerhalb jedes Clusters identisch sind und wobei der Abstand zwischen dem letzten Magneten eines Clusters und dem benachbarten Magneten des nächsten Clusters größer ist als der Abstand zwischen zwei benachbarten Magneten innerhalb jedes Clusters, wobei die Cluster gleichmäßig um den Umfang des Rotors verteilt sind.

**2.** Verfahren nach Anspruch 1, wobei für jeden Teiler N* von PP mit N*<N, Folgendes gilt:

$$fR(N*) < RPS*NSPP*PP$$

oder

$$fS(N*) < RPS*NSPP*PP,$$

wobei fR(N*) eine Eigenfrequenz einer N*-ten Umfangseigenmode des Rotors ist und fS(N*) eine Eigenfrequenz einer N*-ten Umfangseigenmode des Stators ist.

**3.** Verfahren nach Anspruch 2, wobei in der Maschine alle Rotor-Permanentmagnete (12) die gleiche Form und Abmessung aufweisen.

**4.** Verfahren nach Anspruch 1, wobei in der Maschine der Abstand zwischen jedem benachbarten Rotor-Permanentmagneten (12) innerhalb jedes Clusters minimal eingestellt ist, so dass sich die genannten Magnete berühren.

**5.** Verfahren nach einem der Ansprüche 1 bis 4, wobei in der Maschine die Statorwicklung eine verteilte Wicklung mit 6 Schlitzen pro Polpaar ist.

**6.** Verfahren nach Anspruch 1, wobei in der Maschine die Clusterabmessungen bis auf 10% jeder Abmessung identisch sind.

**7.** Verfahren nach einem der Ansprüche 1 bis 3, wobei in der Maschine der Rotor (10) ein Außenrotor ist und die Rotor-Permanentmagnete (12) radial magnetisiert sind.

**8.** Verfahren nach Anspruch 3, wobei sich innerhalb jedes Clusters M gleiche Magnetpole mit wechselnder Polarität befinden und diese gemäß der folgenden Gleichung angeordnet sind:

$$\alpha 1 = (M*NSPP/2-1)*SP / M,$$

wobei SP der Statorabstand ist, der sich aus der Breite eines Statorzahns und der Breite eines Statorspaltes zusammensetzt, und $\alpha 1$ der Rotormagnetpolabstand ist, der den Abstand zwischen den Mittelpunkten der Magnetpole innerhalb jedes Clusters angibt.

## Revendications

1. Procédé de fourniture d'une configuration distincte de pôles magnétiques de paires de pôles d'une machine électrique synchrone polyphasée afin de réduire le bruit acoustique et les vibrations résultant des résonances modales de ladite machine, dans lequel chaque paire de pôles magnétiques comprend deux pôles magnétiques de polarité opposée, la machine comprenant :

   un rotor (10) ayant un nombre de paires de pôles magnétiques de rotor PP ; PP étant un nombre entier supérieur à 10 ; et
   un stator (20) ayant un nombre de fentes de stator NSPP par paire de pôles magnétiques de rotor et des enroulements agencés dans lesdites fentes de stator, NSPP étant un nombre entier supérieur à zéro ;
   le procédé comprend l'étape consistant à agencer lesdits pôles magnétiques de rotor en N groupes de plus de 2 pôles par groupe, où N est choisi de sorte que les inégalités suivantes soient satisfaites :

   $$fR(N) > RPS*NSPP*PP$$

   et

   $$fS(N) > RPS*NSPP*PP,$$

   où PP est le nombre de paires de pôles magnétiques de rotor PP, NSPP est le nombre de fentes de stator, RPS est la vitesse de fonctionnement maximale de la machine électrique, fR(N) est une fréquence propre d'un N-ième mode propre circonférentiel du rotor, et fS(N) est une fréquence propre d'un N-ième mode propre circonférentiel du stator, et où N est un diviseur de PP,
   dans lequel le groupe est un ensemble de pôles magnétiques permanents, dans lequel tous les aimants permanents (12) du rotor sont montés sur une surface du rotor (10), dans lequel les distances entre des aimants adjacents au sein de chaque groupe sont identiques, et dans lequel la distance entre le dernier aimant d'un groupe et l'aimant adjacent du groupe suivant est supérieure à la distance entre deux aimants adjacents au sein de chaque groupe, dans lequel les groupes sont répartis uniformément autour de la circonférence du rotor.

2. Procédé selon la revendication 1, dans lequel, pour tout diviseur N* de PP avec N* < N, on a :

   $$fR(N^*) < RPS*NSPP*PP$$

   ou

   $$fS(N^*) < RPS*NSPP*PP,$$

   où fR(N*) est une fréquence propre d'un N*-ième mode propre circonférentiel du rotor, et fS(N*) est une fréquence propre d'un N*-ième mode propre circonférentiel du stator.

3. Procédé selon la revendication 2, dans lequel, dans la machine, tous les aimants permanents (12) du rotor ont la même forme et les mêmes dimensions.

4. Procédé selon la revendication 1, dans lequel, dans la machine, la distance entre chaque aimant permanent (12) adjacent du rotor au sein de chaque groupe est réglée au minimum, de sorte que lesdits aimants se touchent.

5. Procédé selon l'une des revendications 1 à 2 à 4, dans lequel, dans la machine, l'enroulement de stator est un enroulement réparti à 6 fentes par paire de pôles.

6. Procédé selon la revendication 1, dans lequel, dans la machine, les dimensions des groupes sont identiques à 10% près pour chaque dimension.

7. Procédé selon l'une des revendications 1 à 3, dans lequel, dans la machine, le rotor (10) est un rotor externe et les aimants permanents (12) du rotor sont aimantés radialement.

8. Procédé selon la revendication 3, dans lequel il existe M pôles magnétiques égaux de polarité alternée au sein de chaque groupe, et ceux-ci sont agencés selon l'équation suivante

   $$\alpha 1 = (M*NSPP/2-1)*SP / M,$$

   où SP est le pas du stator, qui correspond à la largeur d'une dent du stator combinée à la largeur d'une encoche du stator, et $\alpha 1$ est le pas des pôles magnétiques du rotor, qui correspond à la distance entre les centres des pôles magnétiques au sein de chaque groupe.

Fig. 1

Fig. 2

Fig. 3

Fig. 4

Fig. 5

Fig. 6

(a)

(b)

Fig.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7064503 B2
- US 9627936 B2
- US 9059621 B2
- EP 0559818 B1
- US 4751416 A
- US 7592729 B2
- US 8120223 B2
- US 8018109 B2
- US 9590458 B2
- JP 8251847 B
- US 2010117476 A
- US 2010045131 A